(19) Europäisches Patentamt
European Patent Office
Office européen des brevets

(11) **EP 2 397 678 B1**

(12) **EUROPEAN PATENT SPECIFICATION**

(45) Date of publication and mention
of the grant of the patent:
**20.05.2020 Bulletin 2020/21**

(51) Int Cl.:
*F02D 41/02* (2006.01)       *F02D 41/34* (2006.01)
*F02B 17/00* (2006.01)       *F02D 13/02* (2006.01)
*F02D 41/30* (2006.01)       *F02B 25/14* (2006.01)
*F02B 31/06* (2006.01)       *F02D 41/00* (2006.01)

(21) Application number: **11170017.5**

(22) Date of filing: **15.06.2011**

(54) **Internal Combustion Engine**

Verbrennungsmotor

Moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2010 JP 2010136486**

(43) Date of publication of application:
**21.12.2011 Bulletin 2011/51**

(73) Proprietor: **Mitsubishi Jidosha Kogyo Kabushiki
Kaisha
Tokyo 108-8410 (JP)**

(72) Inventors:
• **Tanaka, Dai**
**Tokyo 108-8410 (JP)**
• **Sato, Kimihiko**
**Tokyo 108-8410 (JP)**
• **Nakane, Kazuyoshi**
**Tokyo 108-8410 (JP)**
• **Yamamoto, Shigeo**
**Tokyo 108-8410 (JP)**

(74) Representative: **Vossius & Partner
Patentanwälte Rechtsanwälte mbB
Siebertstrasse 3
81675 München (DE)**

(56) References cited:
**JP-A- 2003 239 749     JP-A- 2007 239 583**

**Description**

Technical Field

The present invention is related to an internal combustion engine which controls a condition of fuel injection into an intake passage, thereby activating an exhaust purifying catalyst early, without providing within a cylinder a fuel injection device which injects fuel directly into the cylinder.

As an internal combustion engine (engine), an intra-cylinder injection type engine in which a direct-injection injector which injects fuel directly into a cylinder is provided within the cylinder is put into practical use. In the intra-cylinder injection type engine, through so-called stratified lean burn in which an air-fuel mixture having rich fuel can be gathered around an ignition plug by directly injecting high-pressure fuel into a cylinder from the direct-injection injector, combustion can be made in a state in which a total air-fuel ratio is lean and a significant reduction in fuel consumption can be realized. Also, the latent heat of vaporization of the fuel can be utilized for cooling the intake air, and the temperature of an air-fuel mixture can be lowered to suppress the occurrence of knocking. Moreover, since the air density can be raised by the cooling of the intake air, the intake air amount at the time of full-load can be increased to improve performance.

Even in such an intra-cylinder injection type engine, an exhaust purifying catalyst which performs purification of exhaust gas is provided in an exhaust passage. Since the exhaust purifying catalyst cannot achieve satisfactory purification characteristics if the temperature thereof does not reach a predetermined active temperature or higher, it is brought about that the exhaust purifying catalyst is activated early, for example, immediately after cold starting (refer to Japanese Patent Publication No. 8-228447). The technique disclosed in Japanese Patent Publication No. 8-228447 performs a sub-injection in an expansion stroke separately from the main injection, combusts the fuel through the sub-injection, utilizing the spark propagation of the main combustion, to raise the temperature of the exhaust gas to raise the fuel resulting from the sub-injection, thereby activating the exhaust purifying catalyst early.

In the intra-cylinder injection type engine, early activation of the exhaust purifying catalyst can be easily implemented. However, since the direct-injection injector is mounted within a cylinder, the injector may be exposed to high-temperature and high-pressure combustion gas. For this reason, the direct-injection injector requires securing of temperature resistance and pressure resistance, and requires an expensive fuel injection system. Additionally, since it is necessary to inject high-pressure fuel from the direct-injection injector, it is not possible to avoid the power loss of a high-pressure pump affecting performance. Moreover, deposits are apt to be produced inside a cylinder due to the carbonization of fuel, and the deposits are apt to be accumulated according to operating conditions. Thus, it is necessary to take measures for the deposits.

JP 2007 239583 A discloses a combustion control device. When fuel is injected from fuel injection valves into an intake passage, fuel is injected two times. A first injection is performed during an exhaust stroke, and a second injection is performed during an intake stroke. The direction of injection is changed between the first injection and the second injection.

Summary of Invention

Technical Problem

The invention is made in consideration of the above circumstances, and the object thereof is to provide an internal combustion engine which can control the conditions of the fuel injection into an intake passage, thereby activating an exhaust purifying catalyst early, without providing within a cylinder a direct-injection injector which injects fuel directly into the cylinder.

Solution to Problem

According to the invention, an internal combustion engine as recited in the independent claim is provided. The dependent claims define embodiments.

In order to achieve the above object, there is provided an internal combustion engine comprising: an injector which injects fuel into an intake passage; an intake opening which communicates the intake passage with the inside of a cylinder; a fuel injection means including at least an intake stroke injection means which causes the injector to inject fuel during an intake stroke; and an injection control means which controls the intake stroke injection means to inject fuel from the injector during the intake stroke and introduce fuel into the cylinder from the intake opening, thereby forming a stratified air-fuel mixture within the cylinder, in a state where the temperature of an exhaust purifying catalyst is lower than or equal to a predetermined temperature. The control means operates the intake stroke injection means to inject fuel such that the center of a fuel injection period from the injector is located before displacement speed of an intake valve in a closing direction occurs.

In the invention, fuel is injected into the intake passage during an intake stroke from the injector, fuel is injected into the intake passage from the injector during an exhaust stroke, and fuel is made to flow into a cylinder when the intake valve is being opened. As for the fuel injection during the intake stroke, fuel is injected from the injector such that the center of the fuel injection period from the injector is located before displacement speed in the closing direction is generated in the intake valve. Thus, at least most of the fuel can be injected in the period for suction of an air-fuel mixture into the cylinder is promoted.

When the temperature of the exhaust purifying catalyst is a predetermined temperature or lower, it is possible to inject fuel from the injector during an intake stroke to form a stratified air-fuel mixture within a cylinder, gather the air-fuel mixture of a fuel-rich portion around the ignition plug, and stabilize ignition and flame propagation, thereby retarding the ignition timing and raising the exhaust gas temperature due to the retardation of the ignition timing. Moreover, CO produced in the combustion of a fuel-rich portion and $O_2$ produced in the combustion of a fuel-lean portion in the stratified air-fuel mixture are made to coexist with the exhaust gas, and an oxidization reaction in the latter half of an expansion stroke within a cylinder, an oxidization reaction within an exhaust pipe, and an oxidization reaction of the exhaust purifying catalyst are promoted, thereby raising the temperature of the exhaust purifying catalyst.

Thereby, it is possible to control the conditions of the fuel injection into the intake passage, thereby activating the exhaust purifying catalyst early, without providing within a cylinder a direct-injection injector which injects fuel directly into the cylinder.

Also, in the fuel injection using the intake stroke injection means, fuel is injected when the intake valve is being opened, whereby adhesion of fuel to a wall surface is suppressed to utilize the latent heat of vaporization of the fuel not for cooling of a wall surface with a large specific heat but for cooling the intake air, thereby lowering the temperature of an air-fuel mixture to suppress the occurrence of knocking, and raising the air density to increase the intake air amount at the time of full load. In the fuel injection using the injector, while the intake valve is being opened, fuel passes between a valve seat and an umbrella portion and is directed to the inside of a cylinder, which is effective.

Additionally, since the injector is provided in the intake passage, a simple structure is obtained which is not exposed to high-temperature and high-pressure combustion gas and does not require securing of temperature resistance and pressure resistance. Additionally, since it is not necessary to inject high-pressure fuel, a high-pressure pump is unnecessary, and effect on the performance resulting from the power loss of the pump can be made small.

Also, the internal combustion engine may be configured such that the control means operates the intake stroke injection means to complete the fuel injection from the injector, before displacement speed of the intake valve in the closing direction occurs.

In the invention, the fuel injection from the injector is completed before displacement speed in the closing direction is generated in the intake valve, i.e., in a period for which the displacement speed of the intake valve is zero or more. Thus, a predetermined amount of fuel can be completely injected into a cylinder to the maximum in a state where fuel is drawn into the cylinder due to the opening of the intake valve.

Additionally, the internal combustion engine is configured such that the injector is provided such that the fuel injected by the operation of the intake stroke injection means passes between an outer periphery of an umbrella portion of the intake valve and an edge of the intake opening, and a fuel-rich portion of the stratified air-fuel mixture is guided around the injection plug.

In the invention, fuel is injected from the injector such that the injected fuel passes between the outer periphery of an umbrella portion of the intake valve and the edge of the intake opening, and the fuel-rich portion of the stratified air-fuel mixture is stagnated within a separation vortex of the umbrella portion of the intake valve, and the fuel-rich portion is guided around the ignition plug. Thus, stability of ignition can be made more reliable.

Additionally, the internal combustion engine may further comprise a valve opening and closing timing changing means which changes an opening timing and a closing timing of the intake valve, using the control means. The control means may cause the valve opening and closing timing changing means to set the closing timing of the intake valve to a vicinity of an intake bottom dead point.

In the invention, the closing timing of the intake valve is set to the vicinity of the intake bottom dead center. Thereby, when a piston ascends, the intake valve is closed. As a result, an air-fuel mixture of a fuel-rich portion is not blown back to the intake passage, and the periphery of the ignition plug does not become lean.

Advantageous Effects of Invention

The internal combustion engine of the invention can control the conditions of fuel injection into the intake passage, thereby activating the exhaust purifying catalyst early, without providing within a cylinder a direct-injection injector which injects fuel directly into the cylinder.

Brief Description of Drawings

Fig. 1 is a schematic configuration view of an internal combustion engine related to one embodiment of the invention.
Fig. 2 is configuration view of chief parts in Fig. 1.
Fig. 3 is a schematic block diagram showing the functions of injection control.
Fig. 4 is a control flow chart of fuel injection.
Fig. 5 is a view showing changes over time of the lift operation and displacement speed of an intake valve.
Fig. 6 is an explanatory view of the operation of the intake valve illustrating fuel injection timing.

Description of Embodiments

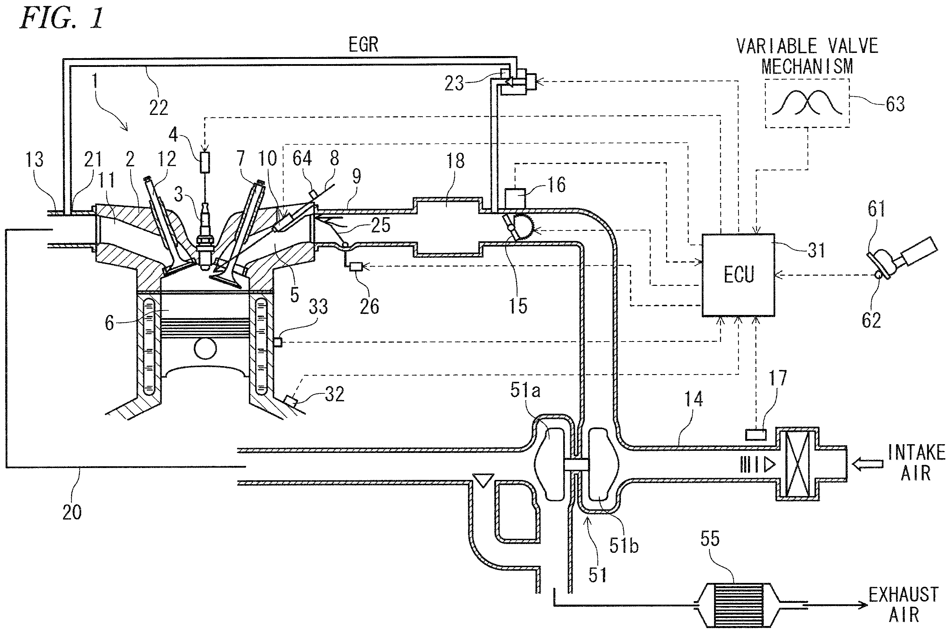

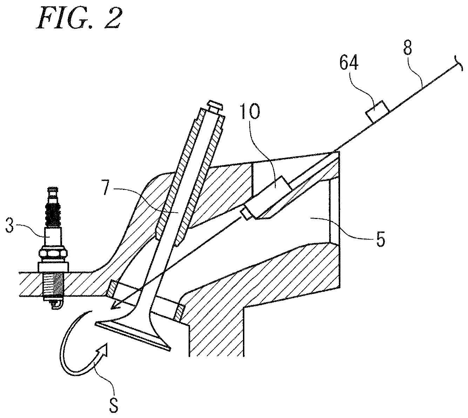

The internal combustion engine of the invention will be described with reference to Figs. 1 and 2.

Fig. 1 shows the schematic configuration of the overall internal combustion engine related to one embodiment of the invention, and Fig. 2 shows the configuration around an intake port.

As shown in Fig. 1, an ignition plug 3 for each cylinder is attached to a cylinder head 2 of an engine body (hereinafter referred to as "engine") 1 which is an internal combustion engine, and an ignition coil 4 which outputs a high voltage is connected to the ignition plug 3. The cylinder head 2 is formed with an intake port 5 (intake passage) for each cylinder, and an intake valve 7 is provided on the side of a combustion chamber 6 of each intake port 5. The intake valve 7 is opened or closed according to the cam of the cam shaft (not shown) which rotates according to the rotation of the engine so as to perform communication or blocking between each intake port 5 and the combustion chamber 6.

One end of an intake manifold 9 is connected to each intake port 5, and the intake manifold 9 communicates with the intake port 5. An electromagnetic fuel injection valve (injector) 10 is attached to the intake manifold 9, and fuel is supplied to the injector 10 via a fuel pipe 8 from a fuel tank. The electromagnetic fuel injection valve 10 may be attached to the cylinder head 2.

Additionally, the cylinder head 2 is formed with an exhaust port 11 for each cylinder, and an exhaust valve 12 is provided on the side of the combustion chamber 6 of the exhaust port 11. The exhaust valve 12 is opened or closed according to the cam of the cam shaft (not shown) which rotates according to the rotation of the engine so as to perform communication or blocking between each exhaust port 11 and the combustion chamber 6. Also, one end of an exhaust manifold 13 is connected to each exhaust port 11, and the exhaust manifold 13 communicates with the exhaust port 11.

In addition, since this type of engine is known, details of the configuration thereof are omitted.

An intake pipe 14 is connected to the intake manifold 9 on the upstream side of the injector 10, an electromagnetic throttle valve 15 is attached to the intake pipe 14, and the intake pipe is provided with a throttle position sensor 16 which detects the opening degree of the throttle valve 15. The stepped amount of an accelerator pedal 61 is detected by an accelerator position sensor 62, and the throttle valve 15 is operated on the basis of the detection information of the accelerator position sensor 62.

An air flow sensor 17 which measures intake air amount is provided on the upstream side of the throttle valve 15. As the air flow sensor 17, a Karman vortex type or hot film type air flow sensor is used. Additionally, the intake pipe 14 between the intake manifold 9 and the throttle valve 15 is provided with a surge tank 18.

An exhaust pipe 20 is connected to the other end of the exhaust manifold 13, and an exhaust gas recirculation port (EGR port) 21 branches to the exhaust manifold 13. One end of an EGR pipe 22 is connected to the EGR port 21, and the other end of the EGR pipe 22 is connected to the intake pipe 14 of an upstream portion of the surge tank 18. The EGR pipe 22 close to the surge tank 18 is provided with an EGR valve 23. As the EGR valve 23 is opened, a portion of exhaust gas is introduced into the intake pipe 14 of the upstream portion of the surge tank 18 via the EGR pipe 22.

That is, the EGR pipe 22 and the EGR valve 23 constitute an exhaust gas recirculation means (EGR device). The EGR device is a device which recirculates a portion of the exhaust gas to an intake system (surge tank 18) of the engine 1, lowers the combustion temperature within the combustion chamber 6 of the engine, and reduces the discharge amount of nitrogen oxide (NOx). As the EGR valve 23 is opened or closed, a portion of the exhaust gas is recirculated to an intake system as EGR gas at a predetermined EGR rate according to an opening degree.

Additionally, as the exhaust gas is recirculated to the intake system of the engine 1 by the EGR device, the amount of air which is controlled by the throttle valve 15 can be reduced. That is, even if the throttle valve 15 is opened, a large amount of air does not flow in, and the throttling loss of the throttle valve 15 can be reduced. Additionally, even in a low-speed and low-rotation region, turbulence can be caused in the intake air which flows into the combustion chamber.

Meanwhile, the intake manifold 9 is provided with a tumble flap 25, and the tumble flap 25 is opened or closed by an actuator 26, such as a negative pressure actuator. The tumble flap 25 is constituted by an openable/closable valve, such as a butterfly valve or a shutter valve, and the tumble flap 25, as shown in Fig. 1, is adapted to open or close the lower half of the intake passage. That is, an opening portion is formed on the upper side of a cross-section of the intake passage by closing the tumble flap 25, and a vertical tumble stream is generated inside the combustion chamber 6 by narrowing the cross-sectional area of the intake passage.

Additionally, the intake pipe 14 of the upstream portion of the surge tank 18 is provided with a supercharger 51. In the supercharger 51, exhaust gas of the engine 1 rotates an exhaust turbine 51a provided at the exhaust manifold 13, intake air is pressurized and increased in volumetric density by the operation of an intake compressor 51b directly connected to the exhaust turbine 51a, and the intake air which is pressurized and increased in volumetric density is sent (supercharged) to the combustion chamber 6.

An exhaust purifying catalyst (for example, ternary catalyst) 55 is interposed in the exhaust pipe 20 connected to the exhaust manifold 13, and exhaust gas is purified by the exhaust purifying catalyst 55. The exhaust purifying catalyst 55 is provided with a catalyst temperature sensor 56, and the active state (for example, whether a cold state or not) of the exhaust purifying catalyst 55 is determined according to the temperature information detected by the catalyst temperature sensor 56.

In addition, in a case where the temperature of the exhaust purifying catalyst 55 is detected, instead of the catalyst temperature sensor 56, it is also possible to estimate (calculate) the temperature using the ECU (electronic control unit) 31 from operating conditions or the like of the engine 1.

For example, in the exhaust purifying catalyst 55, hydrocarbons (HC), carbon monoxide (CO), and nitrogen oxide (NOx), and the like in exhaust gas are purified when the exhaust air-fuel ratio is near the theoretical air-fuel ratio (stoichiometric ratio). Additionally, when the exhaust air-fuel ratio has reached an oxidation atmosphere (lean air-fuel ratio), HC or CO is oxidized or purified, and oxygen ($O_2$) is stored until the exhaust air-fuel ratio reaches a reduction atmosphere (rich air-fuel ratio). When the exhaust air-fuel ratio has reached the rich air-fuel ratio, NOx is reduced or purified, the stored $O_2$ is released, and HC or CO is oxidized or purified.

The engine 1 is provided with a variable valve mechanism 63 which arbitrarily changes the lift amount and lift timing (valve operating conditions) of the intake valve 7 and the exhaust valve 12. As the phase of the cam is changed by the variable valve mechanism 63, the operating conditions of the intake valve 7 and the exhaust valve 12 are arbitrarily set. Additionally, the fuel pipe 8 is provided with a fuel pressure sensor 64 which detects the pressure of the fuel supplied to the injector 10. Moreover, the engine 1 is provided with a crank angle sensor 32 which detects a crank angle to obtain engine rotation speed (Ne), and a water temperature sensor 33 which detects the temperature of cooling water.

ECU (Electronic Control Unit) 31 includes an input/output unit, a storage unit (ROM, RAM, and the like), a central processing unit (CPU), a timer counter, and the like. The integrated control of the engine 1 is performed by the ECU 31.

Various sensors, such as the above-described throttle position sensor 16, air flow sensor 17, crank angle sensor 32, water temperature sensor 33, catalyst temperature sensor 56, accelerator position sensor 62, and fuel pressure sensor 64, are connected to the input side of the ECU 31, and the detection information from these sensors are input thereto. Additionally, the information of the variable valve mechanism 63 is input to the ECU 31, and information on the lift amount and lift timing of the intake valve 7 and the exhaust valve 12 is sent to the ECU.

Meanwhile, various output devices, such as the above-described ignition coil 4, the throttle valve 15, the driving device of the injector 10, the EGR valve 23, the actuator 26 of the tumble flap 25, and the variable valve mechanism 63, are connected to the output side of the ECU 31. Fuel injection amount, fuel injection period, fuel injection timing, ignition timing, the operation timing and operation amount of the EGR valve 23, the operation timing of the tumble flap 25, and the operating conditions (valve operating conditions) of the intake valve 7 and the exhaust valve 12, which are calculated by the ECU 31 on the basis of the detection information from the various sensors, are output to these various output devices.

The air-fuel ratio is set to a proper target air-fuel ratio on the basis of the detection information from the various sensors, the fuel amount according to the target air-fuel ratio is injected from the injector 10 at the proper timing, the throttle valve 15 is adjusted to a proper degree of opening, and spark ignition is implemented at the proper timing by the ignition plug 3.

The engine 1 of the present embodiment is adapted to inject fuel from the injector 10 during an intake stroke and inject fuel from the injector 10 during an exhaust stroke. In addition, if the intake valve 7 is being opened when the injected fuel has reached the vicinity of the intake valve 7, this case is defined as intake stroke injection. If the intake valve 7 has not yet been opened, this case is defined as exhaust stroke injection. In practice, since there exist time delays, such as a valve opening delay of an injector valve until fuel reaches the vicinity of the intake valve 7 from an injector driving command, and a transport delay from the injector 10 to the intake valve 7, the injector driving command for the intake stroke injection may be performed during an exhaust stroke.

By injecting fuel during an intake stroke in which the intake valve 7 is opened, adhesion of fuel to an umbrella portion of the intake port 5 or the intake valve 7 is suppressed, so that the latent heat of vaporization of the fuel can be utilized for cooling the intake air.

For this reason, the temperature of an air-fuel mixture can be lowered to suppress the occurrence of knocking, the air density can be raised to increase the intake air amount at the time of full load, and even in port injection, the effect of intake cooling can be exhibited to the maximum extent.

As shown in Fig. 2, as for the fuel injection using the injector 10, while the intake valve 7 is being opened, the fuel passes between a valve seat of the intake port 5 and the umbrella portion of the intake valve 7, and is directed to the inside of the combustion chamber 6. In this case, a tumble stream within the combustion chamber 6 can be intensified by the fuel induced by the fuel injection by unevenly distributing fuel on the upper side in the drawing across a valve shaft. Additionally, a swirl stream within the combustion chamber 6 can be intensified by unevenly distributing fuel on any one in the right and left directions across the valve shaft.

An air-fuel mixture in which fuel and air are sufficiently mixed uniformly inside the intake port 5 is obtained by injecting fuel from the injector 10 during an exhaust stroke. Since the injector 10 is provided at the intake port 5, the injector 10 has a simple attachment structure which does not require securing of temperature resistance or pressure resistance, without being exposed to high-temperature and high-pressure combustion gas. Additionally, since it is not necessary to inject high-pressure fuel, the effect on performance resulting from the power loss of the pump can be made small.

For this reason, by controlling the conditions of fuel injection to the intake passage without providing within a cylinder a direct-injection injector which injects fuel directly into the cylinder, i.e., by setting the ratio of the fuel injection in an intake stroke and the fuel injection in an exhaust stroke according to operating conditions, it is possible to maintain performance in a case where fuel is directly injected into the cylinder, and obtain high performance.

On the other hand, in the engine 1 of the present embodiment, when the temperature of the exhaust purifying catalyst 55 is lower than a predetermined temperature (at the time of coldness, such as at the time of cold starting), fuel injection (catalyst warm-up combustion) is implemented in order to bring the exhaust purifying catalyst 55 to an active temperature or higher early. That is, fuel is injected at a timing including during an intake stroke, thereby implementing the catalyst warm-up combustion.

By performing fuel injection using the injector 10 during an intake stroke, as shown in Fig. 2, fuel is injected so as to be directed to the combustion chamber 6 between a valve seat of the intake port 5 and an umbrella portion of the intake valve 7. Thereby, a stratified air-fuel mixture is formed within the combustion chamber 6, so that a fuel-rich portion of the air-fuel mixture can be gathered around the ignition plug 3. For this reason, it is possible to stabilize ignition and flame propagation, thereby allowing retardation of the ignition timing, and the temperature of the exhaust gas can be raised due to the retardation of the ignition timing. Moreover, CO and $O_2$ of the fuel-rich portion of the stratified air-fuel mixture are made to coexist with the exhaust gas, and an oxidization reaction in the latter half of an expansion stroke within a cylinder, an oxidization reaction within an exhaust pipe, and an oxidization reaction of the exhaust purifying catalyst 55 are promoted, so that the temperature of the exhaust purifying catalyst 55 can be raised.

Since fuel is unevenly distributed on the upper side in Fig. 2 across a valve shaft, fuel stagnates within a separation vortex S formed at the umbrella portion of the intake valve 7 by an intake flow or a flow induced by fuel injection, and the fuel-rich portion of the air-fuel mixture is guided around the ignition plug 3, so that stability of ignition can be made more reliable. Additionally, as mentioned above, since a tumble stream or swirl stream can be intensified within the cylinder by the flow induced by the fuel injection, flame propagation can be promoted by virtue of the intensification of turbulence within the cylinder, and combustion can be stabilized.

For example, in a double intake valve engine, in the case of an engine (twin injectors) in which injectors are respectively provided in intake ports corresponding to two intake valves, fuel is injected from only one injector to form a swirl stream within a cylinder by the flow induced by the fuel injection. Thereby, flame propagation can be promoted by virtue of the intensification of turbulence within the cylinder, and combustion can be stabilized.

Moreover, in the engine 1 of the present embodiment, when fuel is injected at a timing including during an intake stroke to implement the catalyst warm-up combustion, the timing when the intake valve 7 is closed by the variable valve mechanism 63 becomes the timing near an intake bottom dead center of a piston. Thereby, the intake valve 7 is closed when the piston ascends, and consequently, there is no case where the air-fuel mixture of the fuel-rich portion is blown back to the intake port, and the mixture around the ignition plug becomes lean.

The ratio of fuel injection during an intake stroke and fuel injection during an exhaust stroke is set according to operating conditions of the engine 1 by the injection control means of the ECU 31. Also, if the temperature of the exhaust purifying catalyst 55 is lower than a predetermined temperature, the fuel injection (catalyst warm-up combustion) for bringing the exhaust purifying catalyst 55 to an active temperature or higher is implemented so that sufficient purification characteristics using the exhaust purifying catalyst 55 can be obtained early even at the time of coldness, such as at the time of cold starting. The fuel injection when implementing the catalyst warm-up combustion is set by the injection control means (control means) according to the temperature conditions of the exhaust purifying catalyst 55.

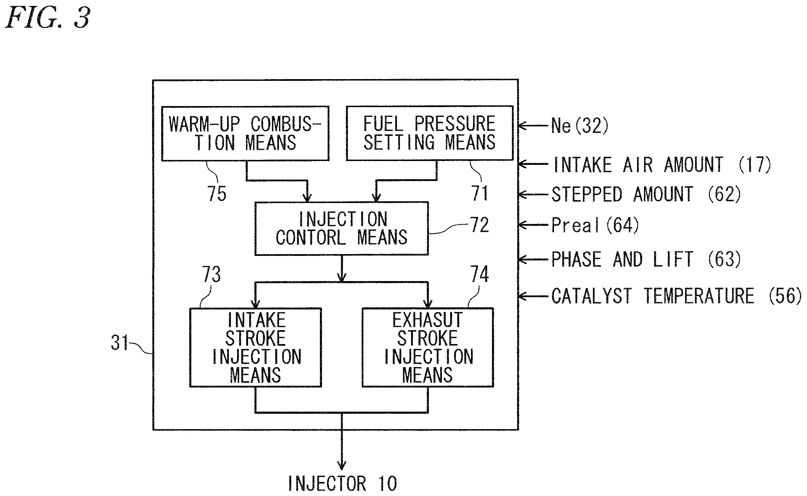

Specific control conditions will be described with reference to Figs. 3 to 6.

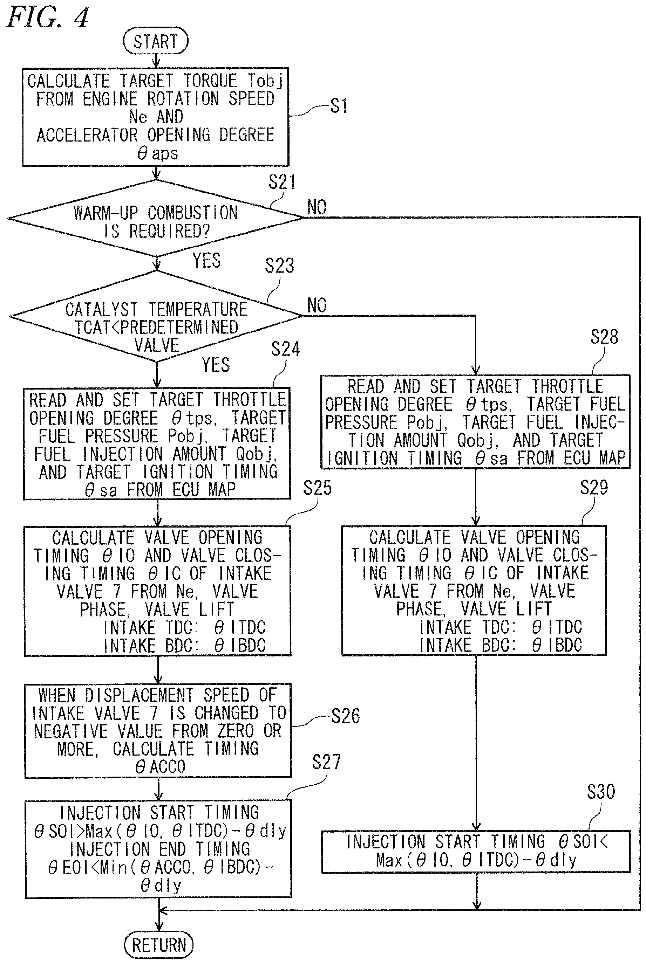

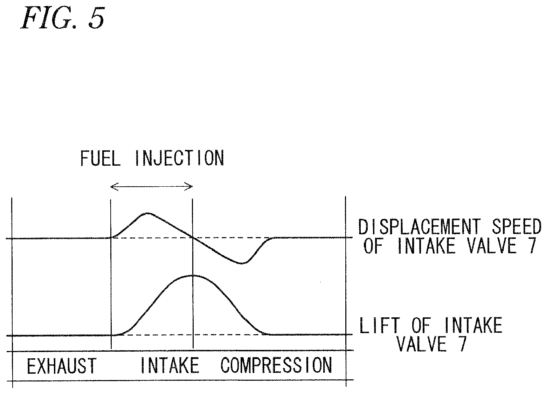

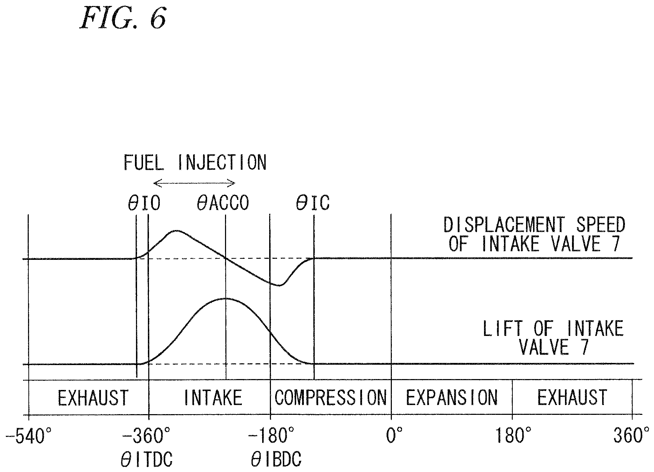

Fig. 3 shows schematic blocks showing the functions of injection control, Fig. 4 shows the conditions of fuel injection using a fuel injection means, Fig. 5 shows change states over time of the lift operation and displacement speed of an intake valve, and Fig. 6 shows the change states over time of the lift operation and displacement speed of the intake valve at the time of the catalyst warm-up combustion.

As shown in Fig. 3, the engine rotation speed Ne based on the detection information of the crank angle sensor 32, the detection information of the air flow sensor 17, the catalyst temperature TCAT based on the information of the catalyst temperature sensor 56, the detection information of the accelerator position sensor 62, an actual fuel pressure Preal based on the detection information of the fuel pressure sensor 64, and phase and lift information (valve phase and valve lift) based on the information of the variable valve mechanism 63 are input to the ECU 31.

The ECU 31 is provided with a fuel pressure setting means 71 which sets fuel pressure (target fuel pressure) Pobj according to the engine rotation speed Ne and load (intake amount or the like) of the engine 1. The target fuel pressure Pobj set by the fuel pressure setting means 71 is sent to an injection control means 72. In the injection control means 72, the ratio of fuel injection in an intake stroke and fuel injection in an exhaust stroke is set according to the target fuel pressure Pobj, and the engine rotation speed Ne and load (intake amount or the like) of the engine 1.

Additionally, the ECU 31 is provided with a warm-up combustion means 75 which determines that warm-up combustion is required depending on various kinds of input information, and the information on warm-up combustion from the warm-up combustion means 75 is sent to the injection control means 72 (control means). In the injection control means 72, the conditions (injection timing, fuel pressure, or the like) of fuel injection in the intake stroke injection is controlled according to the catalyst temperature TCAT, the engine rotation speed Ne of the engine 1, and the intake amount or the like.

Also, the ECU 31 is provided with an intake stroke injection means 73 (fuel injection means) which injects fuel from the injector 10 during an intake stroke, and an exhaust stroke injection means 74 (fuel injection means) which injects fuel from the injector 10 during an exhaust stroke. Driving commands are sent to the injector 10 from the intake stroke injection means 73 and the exhaust stroke injection means 74, and a predetermined amount of fuel is injected at a predetermined stroke timing.

The information ratio of the fuel injection in the intake stroke injection and the fuel injection in the exhaust stroke injection which are set by the injection control means 72 is sent to the intake stroke injection means 73 and the exhaust stroke injection means 74, and driving commands are sent to the injector 10 from the intake stroke injection means 73 and the exhaust stroke injection means 74 according to the information on the ratio. Additionally, at the time of the catalyst warm-up combustion, the conditions (injection timing, fuel pressure, or the like) of the fuel injection in the intake stroke injection is sent, and driving commands are sent to the injector 10 from the intake stroke injection means 73 and the exhaust stroke injection means 74 according to the sent information.

As for the injection end timing of the fuel injection in the intake stroke, the injection end timing is fixed in order to suppress fluctuation in the air-fuel ratio caused by blow-back to the intake port 5 or a change in the amount of adhesion to the umbrella portion of the intake valve 7. As shown in Fig. 5, the period until the lift becomes the maximum after the lift of the intake valve 7 is started becomes a period for which the displacement speed of the intake valve 7 in its opening direction is generated. In this period, fuel hardly adheres to the intake valve 7, and is apt to enter a cylinder directly.

On the other hand, a period after the lift of the intake valve 7 becomes the maximum becomes a period for which displacement speed in its closing direction is generated in the intake valve 7. In this period, fuel is apt to adhere to the intake valve 7, and hardly enters a cylinder directly. Additionally, when fuel injection is performed in a period for which the lift of the intake valve 7 does not become zero after an intake bottom dead center (BDC) of the piston, blow-back to the intake port 5 from a cylinder occurs due to the ascent of a piston, and fuel no longer enters the cylinder directly, Therefore, this is not desirable.

For this reason, fuel is injected and suction of fuel to a cylinder is promoted such that the central position of the fuel injection period is located before the closing of the intake valve 7. In this case, it is also possible to end the fuel injection until the maximum lift timing of the intake valve 7. In other words, it is also possible to end the fuel injection before displacement speed in the closing direction occurs in the intake valve 7. As for the injection end timing of the fuel injection in the exhaust stroke, a change in the amount of adhesion to the umbrella portion of the intake valve 7 is small, and the air-fuel ratio within the cylinder is not influenced. Therefore, the injection end timing is made variable.

Specific processing conditions will be described with reference to Figs. 4 and 6.

As shown in Fig. 4, when processing is started, in Step S1, a target torque Tobj is calculated from the engine rotation speed Ne and accelerator opening degree θaps. In Step 21, it is determined whether or not the engine 1 is warmed up, or whether or not the warm-up combustion for activating the exhaust purifying catalyst 55 is required. Whether or not the warm-up combustion is required is determined by the detection information of the catalyst temperature sensor 56, the elapsed time from the starting of the engine 1, the detection information of the water temperature sensor 33, or the like.

If it is determined in Step S21 that the warm-up combustion is not required, i.e., if it is determined that the engine 1 is warmed up and the exhaust purifying catalyst 55 is in an active state, fuel injection in the intake stroke injection and fuel injection in the exhaust stroke injection are executed on the basis of the ratio set according to operating conditions, and the processing proceeds to return.

If it is determined in Step S21 that the warm-up combustion is required, it is determined in Step S23 whether or not the temperature (catalyst temperature) TCAT of the exhaust purifying catalyst 55 is lower than a predetermined temperature. If it is determined in Step S23 that the catalyst temperature is lower than a predetermined temperature, in Step S24, a target throttle opening degree θtps, the target fuel pressure Pobj, the target fuel injection amount Qobj, and a target ignition timing θsa are read and set from the ECU map on the basis of the engine rotation speed Ne and the target torque Tobj.

In Step S25, a valve opening timing θIO and a valve closing timing θIC are calculated from the engine rotation speed (Ne), the valve phase, the valve lift, the intake top dead center TDC of a piston is set as θITDC, and the intake bottom dead center BDC of a piston is set as θIBDC. In Step S26, the timing when the displacement speed of the intake valve 7 is changed to a negative value from zero or more, i.e., the timing θACC0 when the displacement speed in the closing direction is generated, are calculated.

If the catalyst temperature TCAT is set to, for example, a temperature at the time of coldness which is lower than a predetermined temperature, a control including fuel injection in an intake stroke is implemented without independently performing fuel injection in an exhaust stroke. By implementing the fuel injection in the intake stroke, a stratified air-fuel mixture is supplied to perform the warm-up combustion, thereby activating the exhaust purifying catalyst 55 early.

After the timing θACC0 when the displacement speed of the intake valve 7 is changed to a negative value from zero or more is calculated in Step S26, the processing proceeds to Step S27 where the fuel injection timing in the catalyst warm-up combustion is set. In Step S27, setting of an injection start timing θSOI and an injection end timing θEOI when fuel injection in an intake stroke is implemented are shown.

In this case, as shown in Fig. 6, the timing is set according to the magnitude of an angle when the compression top dead center of a piston is 0°, the intake bottom dead center θIBDC is -180°, the intake top dead center θITC is -360°, and the exhaust bottom dead center is -540°.

In Step S27, the injection start timing θSOI and the injection end timing θEOI are set, the processing is returned to, and thereby, the processing of the catalyst warm-up combustion ends. As a result, the fuel pressure may be set to be high in order to shorten the injecting timing to further raise the degree of stratification.

The injection start timing θSOI is set to a timing later than the timing obtained by subtracting (advancing) the delay time θdly until injected fuel has reached the intake valve 7 from a larger one (later one) of the valve opening timing θIO and the intake top dead center θITDC. The delay time θdly includes a valve opening degree of an injector needle valve. That is, the injection start timing θSOI is set such that fuel is injected into a cylinder in a state where the intake valve 6 is opened. That is, the following expression (1) is satisfied:

$$\theta SOI > Max(\theta IO, \theta ITDC) - \theta dly \quad (1)$$

The injection end timing θEOI is set to the timing earlier than the timing obtained by subtracting (advancing) the delay time θdly until injected fuel has reached the intake valve 7 from a smaller one (earlier one) of the timing θACC0 when the displacement speed of the intake valve 7 is changed to a negative valve from zero or more and the intake bottom dead center θIBDC. That is, the following expression (2) is satisfied:

$$\theta EOI < Min(\theta ACC0, \theta IBDC) - \theta dly \quad (2)$$

On the other hand, if it is determined in Step S23 that the catalyst temperature TCAT is a predetermined temperature or higher, in Step S28, the target throttle opening degree θtps, the target fuel pressure Pobj, the target fuel injection amount Qobj, and the target ignition timing θsa are read and set from the ECU map on the basis of the engine rotation speed Ne, and the target torque Tobj.

In Step S29, the valve opening timing θIO and the valve closing timing θIC of the intake valve 7 are calculated from the engine rotation speed Ne, the valve phase, and the valve lift, and the intake top dead center (TDC) of a piston is set to θITDC, and the intake bottom dead center (BDC) of a piston is set to θIBDC. In Step S30, the injection start timing θSOI is set, the processing proceeds to return, and the processing of the catalyst warm-up combustion ends.

The injection start timing θSOI is set to the timing earlier than the timing obtained by subtracting (advancing) the delay time θdly until injected fuel has reached the intake valve 7 from a larger one (later one) of the valve opening timing θIO of the intake valve 7 and the intake top dead center θITDC. : The delay time θdly includes a valve opening degree of an injector needle valve. That is, the injection start timing θSOI is set such that an air-fuel mixture, in which fuel is injected in a state where the intake valve 7 is closed and the fuel is sufficiently homogeneously mixed, is supplied to a cylinder. That is, the following expressing (3) is satisfied:

$$\theta SOI < Max(\theta IO, \theta ITDC) - \theta dly \qquad (3)$$

It is desirable to perform the exhaust stroke injection in order to sufficiently take the vaporization time of the fuel until the warm-up of the engine ends after the processing of the catalyst warm-up combustion has ended, and suppress emission of HC. At this time, in order to give preference to suppression of HC emission and realize suppression of HC emission caused by the promotion of the atomization of a mist, the fuel pressure may be set to be high. Additionally, in order to give preference to improvement in fuel costs, the fuel pressure may be set to be low.

During the catalyst warm-up which is the case where it is determined in Step S23 that the catalyst temperature TCAT is lower than a predetermined temperature, compared to the case where it is determined in Step S23 that the catalyst temperature TCAT is a predetermined temperature or higher, torque is not output due to the setting of retarding the ignition timing greatly for the purpose of making the exhaust gas temperature high. Thus, it is necessary to open the throttle valve greatly, and the fuel injection amount increases correspondingly.

In the above-described engine 1, when the temperature of the exhaust purifying catalyst 55 is lower than a predetermined temperature, or at the time of coldness such as at the time of cold starting, fuel can be injected at a timing including during an intake stroke to implement the catalyst warm-up combustion, and the exhaust purifying catalyst 55 can be activated to an active temperature or higher early. That is, it is possible to gather a fuel-rich portion of an air-fuel mixture around the ignition plug 3 and stabilize ignition and flame propagation, thereby raising the exhaust gas temperature due to the retardation of the ignition timing. Additionally, CO and $O_2$ of the fuel-rich portion of the stratified air-fuel mixture are made to coexist with the exhaust gas, and an oxidization reaction in the latter half of an expansion stroke within a cylinder, an oxidization reaction within an exhaust pipe, and an oxidization reaction of the exhaust purifying catalyst 55 are promoted, so that the temperature of the exhaust purifying catalyst 55 can be raised.

In the catalyst warm-up combustion, the period of fuel injection of an intake stroke becomes a period for which fuel is injected such that the central position of the fuel injection period is located before the closing of the intake valve 7, and becomes a period for which the displacement speed of the intake valve 7 in its opening direction is generated. For this reason, fuel can be injected in a period for which suction of an air-fuel mixture to a cylinder is promoted. Additionally, the timing when the intake valve 7 is closed becomes the timing in the vicinity of the intake bottom dead point of a piston. Thereby, the intake valve 7 is closed when the piston ascends and consequently, there is no case that the mixture of the fuel-rich portion is blown back to the intake port, and the mixture around the ignition plug becomes lean.

Accordingly, the above-described engine 1 can control the conditions of fuel injection into the intake passage, thereby activating the exhaust purifying catalyst 55 early, without providing within a cylinder a direct-injection injector which injects fuel directly into the cylinder.

Industrial Applicability

The invention can be utilized in the industrial field of an internal combustion engine which can activate the exhaust purifying catalyst early.

**Claims**

**1.** An internal combustion engine, comprising:

an injector (10) which injects fuel into an intake passage (5) formed in a cylinder head (2) during an intake stroke and during an exhaust stroke;
an intake opening which communicates the intake passage (5) an inside of a cylinder;
an intake stroke injection means (73) which causes the injector (10) to inject fuel during the intake stroke while an intake valve (7) is opening;
an exhaust stroke injection means (74) which causes the injector (10) to inject fuel during the exhaust stroke before an intake valve (7) is opening; and
an injection control means (72) which controls the intake stroke injection means (73) to inject fuel from the injector during the intake stroke and introduce fuel into the cylinder from the intake opening, thereby forming a stratified air-fuel mixture within the cylinder, in a state where a temperature of an exhaust purifying catalyst is lower than or equal to a predetermined temperature,
wherein the injection control means (72) operates the intake stroke injection means (73) such that a center of a fuel injection period from an injection start timing until an injection end timing, the fuel injection period is performed in a period where the fuel is injected from the injector (10), is located before a displacement speed of the intake valve (7) in a closing direction occurs,

**characterized in that**

the injector (10) is attached to an intake manifold (9) connected to the intake passage (5) such that the fuel injected by the operation of the intake stroke injection means (73) passes between an outer periphery of an umbrella portion of the intake valve (7) and an edge of the intake opening so as to be directly introduced into the cylinder in a period until a lift of the intake valve becomes the maximum after the lift is started, and a fuel-rich portion of the stratified air-fuel mixture is guided around an ignition plug (3) in order to retard the ignition timing; and

the injection start timing satisfies the following expression (1):

$$\theta SOI > Max(\theta IO, \theta ITDC) - \theta dly \qquad (1) \; ;$$

and

the injection end timing satisfies the following expression (2):

$$\theta EOI < Min(\theta ACC0, \theta IBDC) - \theta dly \qquad (2),$$

where $\theta SOI$ denotes the injection start timing, $\theta IO$ denotes an opening timing of the intake valve (7), $\theta ITDC$ denotes an intake top dead center, $\theta dly$ denotes a delay time, $\theta EOI$ denotes the injection end timing, $\theta ACC0$ denotes a time at which the displacement speed of the intake valve (7) is changed to a negative value from zero or more, and $\theta IBDC$ denotes an intake bottom dead center.

2. The internal combustion engine according to claim 1, wherein
   the injection control means (72) operates the intake stroke injection means (73) to complete the fuel injection from the injector (10), before the displacement speed of the intake valve (7) in the closing direction occurs.

3. The internal combustion engine according to claim 1 or 2, further comprising:

   a variable valve mechanism (63) which changes the opening timing and a closing timing of the intake valve (7), using a control means (31: ECU) including the injection control means (72),
   wherein the control means (31) causes the variable valve mechanism (63) to set the closing timing of the intake valve (7) to a vicinity of an intake bottom dead point.

4. The internal combustion engine according to any one of claims 1 to 3,
   wherein injectors are respectively provided in intake ports corresponding to two intake valves and wherein the internal combustion engine is configured such that fuel is injected from only one injector to form a swirl stream within the cylinder.

**Patentansprüche**

1. Verbrennungsmotor, aufweisend:

   einen Injektor (10), der Kraftstoff in eine Einlasspassage (5), die in einem Zylinderkopf (2) gebildet ist, während eines Ansaughubs und während eines Ausstoßhubs einspritzt;
   eine Einlassöffnung, welche die Einlasspassage (5) und ein Inneres eines Zylinders miteinander verbindet;
   ein Ansaughubeinspritzmittel (73), das den Injektor (10) veranlasst, während des Ansaughubs Kraftstoff einzuspritzen, während sich ein Einlassventil (7) öffnet;
   ein Ausstoßhubeinspritzmittel (74), welches den Injektor (10) veranlasst, während des Ausstoßhubs Kraftstoff einzuspritzen, bevor sich ein Einlassventil (7) öffnet; und
   ein Einspritzsteuerungsmittel (72), welches das Ansaughubeinspritzmittel (73) steuert, während des Ansaughubs Kraftstoff aus dem Injektor einzuspritzen und aus der Einlassöffnung Kraftstoff in den Zylinder einzuleiten, wodurch ein geschichtetes Kraftstoff-Luft-Gemisch innerhalb des Zylinders gebildet wird, in einem Zustand, bei dem eine Temperatur eines Abgasreinigungskatalysators kleiner oder gleich einer vorgegebenen Temperatur ist,

wobei das Einspritzsteuerungsmittel (72) das Ansaughubeinspritzmittel (73) derart betätigt, dass eine Mitte eines Kraftstoffeinspritzzeitraums von einem Einspritzstartzeitpunkt bis zu einem Einspritzendzeitpunkt, wobei der Kraftstoffeinspritzzeitraum in einem Zeitraum durchgeführt wird, in dem der Kraftstoff aus dem Injektor (10) eingespritzt wird, vor Auftreten einer Verlagerungsgeschwindigkeit des Einlassventils (7) in einer Schließrichtung, liegt,

**dadurch gekennzeichnet, dass**

der Injektor (10) an einem Einlasskrümmer (9) angebracht ist, der mit der Einlasspassage (5) derart verbunden ist, dass der durch die Betätigung des Ansaughubeinspritzmittels (73) eingespritzte Kraftstoff zwischen einen Außenumfang eines Schirmabschnitts des Einlassventils (7) und einen Rand der Einlassöffnung gelangt, um direkt in den Zylinder eingeleitet zu werden, in einem Zeitraum bis ein Hub des Einlassventils maximal wird, nachdem der Hub begonnen wurde, und ein kraftstoffreicher Teil des geschichteten Kraftstoff-Luft-Gemischs um eine Zündkerze (3) herum geführt wird, um den Zündzeitpunkt zu verzögern; und

der Einspritzstartzeitpunkt den nachfolgenden Ausdruck (1) erfüllt:

$$\theta SOI > Max(\theta IO, \theta ITDC) - \theta dly \qquad (1);$$

und

der Einspritzendzeitpunkt den nachfolgenden Ausdruck (2) erfüllt:

$$\theta EOI < Min(\theta ACC0, \theta IBDC) - \theta dly \qquad (2),$$

wobei $\theta SOI$ den Einspritzstartzeitpunkt bezeichnet, $\theta IO$ einen Öffnungszeitpunkt des Einlassventils (7) bezeichnet, $\theta ITDC$ einen oberen Ansaug-Totpunkt bezeichnet, $\theta dly$ eine Verzögerungszeit bezeichnet, $\theta EOI$ den Einspritzendzeitpunkt bezeichnet, $\theta ACC0$ einen Zeitpunkt bezeichnet, bei dem die Verlagerungsgeschwindigkeit des Einspritzventils (7) zu einem negativen Wert von Null oder mehr verändert wird, und $\theta IBDC$ einen unteren Ansaug-Totpunkt bezeichnet.

2. Verbrennungsmotor nach Anspruch 1, wobei
das Einspritzsteuerungsmittel (72) das Ansaughubeinspritzmittel (73) betätigt, um die Kraftstoffeinspritzung aus dem Injektor (10) vor Auftreten der Verlagerungsgeschwindigkeit des Einlassventils (7) in der Schließrichtung abzuschließen.

3. Verbrennungsmotor nach Anspruch 1 oder 2, ferner aufweisend:

einen variablen Ventilmechanismus (63), der den Öffnungszeitpunkt und einen Schließzeitpunkt des Einlassventils (7) mithilfe eines Steuerungsmittels (31: ECU), das das Einspritzsteuerungsmittel (72) aufweist, ändert, wobei das Steuerungsmittel (31) den variablen Ventilmechanismus (63) veranlasst, den Schließzeitpunkt des Einlassventils (7) in einem Bereich in der Nähe des unteren Ansaug-Totpunkts einzustellen.

4. Verbrennungsmotor nach einem der Ansprüche 1 bis 3,
wobei Injektoren jeweils in Einlassstutzen bereitgestellt sind, die zwei Einlassventilen entsprechen, und wobei der Verbrennungsmotor derart eingerichtet ist, dass Kraftstoff aus nur einem Injektor eingespritzt wird, um einen Wirbelstrom innerhalb des Zylinders zu bilden.


**Revendications**

1. Moteur à combustion interne, comprenant :

un injecteur (10) qui injecte du carburant dans un passage d'admission (5) formé dans une culasse (2) pendant une course d'admission et pendant une course d'échappement ;
une ouverture d'admission qui fait communiquer le passage d'admission (5) avec un intérieur d'un cylindre ;
un moyen d'injection de course d'admission (73) qui amène l'injecteur (10) à injecter du carburant pendant la course d'admission alors qu'une soupape d'admission (7) s'ouvre ;
un moyen d'injection de course d'échappement (74) qui amène l'injecteur (10) à injecter du carburant pendant la course d'échappement avant qu'une soupape d'admission (7) ne s'ouvre ; et

un moyen de commande d'injection (72) qui commande le moyen d'injection de course d'admission (73) pour injecter du carburant à partir de l'injecteur pendant la course d'admission et introduire du carburant dans le cylindre à partir de l'ouverture d'admission, formant ainsi un mélange air-carburant stratifié à l'intérieur du cylindre, dans un état où une température d'un catalyseur de purification d'échappement est inférieure ou égale à une température prédéterminée,

dans lequel le moyen de commande d'injection (72) actionne le moyen d'injection de course d'admission (73) de telle sorte qu'un centre d'une période d'injection de carburant depuis un moment de début d'injection jusqu'à un moment de fin d'injection, la période d'injection de carburant étant effectuée dans une période où le carburant est injecté à partir de l'injecteur (10), est situé avant qu'une vitesse de déplacement de la soupape d'admission (7) dans un sens de fermeture ne se produise,

**caractérisé en ce que**

l'injecteur (10) est attaché à un collecteur d'admission (9) relié au passage d'admission (5) de telle sorte que le carburant injecté par l'actionnement du moyen d'injection de course d'admission (73) passe entre une périphérie externe d'une partie en parapluie de la soupape d'admission (7) et un bord de l'ouverture d'admission de manière à être directement introduit dans le cylindre dans une période jusqu'à ce qu'une levée de la soupape d'admission devienne maximale après que la levée a commencé, et une partie riche en carburant du mélange air-carburant stratifié est guidée autour d'une bougie d'allumage (3) afin de retarder le moment d'allumage ; et le moment de début d'injection satisfait à l'expression suivante (1) :

$$\theta SOI > Max(\theta IO, \theta ITDC) - \theta dly \qquad (1) ;$$

et

le moment de fin d'injection satisfait à l'expression suivante (2) :

$$\theta EOI < Min(\theta ACC0, \theta IBDC) - \theta dly \qquad (2),$$

où $\theta SOI$ désigne le moment de début d'injection, $\theta IO$ désigne un moment d'ouverture de la soupape d'admission (7), $\theta ITDC$ désigne un point mort haut d'admission, $\theta dly$ désigne un temps de retard, $\theta EOI$ désigne le moment de fin d'injection, $\theta ACC0$ désigne un moment où la vitesse de déplacement de la soupape d'admission (7) est modifiée en une valeur négative à partir de zéro ou plus, et $\theta IBDC$ désigne un point mort inférieur d'admission.

2. Moteur à combustion interne selon la revendication 1, dans lequel
le moyen de commande d'injection (72) actionne le moyen d'injection de course d'admission (73) pour terminer l'injection de carburant à partir de l'injecteur (10), avant que la vitesse de déplacement de la soupape d'admission (7) dans le sens de fermeture ne se produise.

3. Moteur à combustion interne selon la revendication 1 ou 2, comprenant en outre :

un mécanisme de soupape variable (63) qui modifie le moment d'ouverture et un moment de fermeture de la soupape d'admission (7), à l'aide d'un moyen de commande (31 : ECU) incluant le moyen de commande d'injection (72),
dans lequel le moyen de commande (31) amène le mécanisme de soupape variable (63) à régler le moment de fermeture de la soupape d'admission (7) au voisinage d'un point mort inférieur d'admission.

4. Moteur à combustion interne selon l'une quelconque des revendications 1 à 3,
dans lequel des injecteurs sont respectivement prévus dans des orifices d'admission correspondant à deux soupapes d'admission et dans lequel le moteur à combustion interne est configuré de telle sorte que du carburant est injecté à partir d'un seul injecteur pour former un courant tourbillonnaire à l'intérieur du cylindre.

*FIG. 1*

FIG. 2

FIG. 3

Ne (32)
INTAKE AIR AMOUNT (17)
STEPPED AMOUNT (62)
Preal (64)
PHASE AND LIFT (63)
CATALYST TEMPERATURE (56)

WARM-UP COMBUS-TION MEANS — 75

FUEL PRESSURE SETTING MEANS — 71

INJECTION CONTORL MEANS — 72

INTAKE STROKE INJECTION MEANS — 73

EXHASUT STROKE INJECTION MEANS — 74

INJECTOR 10

31

## FIG. 4

```
        (START)
           │
           ▼
┌──────────────────────────┐
│ CALCULATE TARGET TORQUE Tobj │
│ FROM ENGINE ROTATION SPEED │──── S1
│          Ne AND           │
│ ACCELERATOR OPENING DEGREE │
│          θaps             │
└──────────────────────────┘
           │
           ▼
       ◇ S21 ◇                      NO
   WARM-UP COMBUSTION ─────────────────────────┐
      IS REQUIRED?                              │
           │ YES    S23                         │
           ▼                        NO          │
  ◇ CATALYST TEMPERATURE ◇ ─────────────┐       │
    TCAT<PREDETERMINED                   │       │
         VALVE                           │       │
           │ YES    S24                  │       │
           ▼                             ▼       │
┌──────────────────────────┐   ┌──────────────────────────┐
│ READ AND SET TARGET THROTTLE │ S28                       │
│ OPENING DEGREE θtps, TARGET │ │ READ AND SET TARGET THROTTLE │
│ FUEL PRESSURE Pobj, TARGET │ │ OPENING DEGREE θtps, TARGET FUEL │
│ FUEL INJECTION AMOUNT Qobj, │ │ PRESSURE Pobj, TARGET FUEL INJEC- │
│ AND TARGET IGNITION TIMING │ │ TION AMOUNT Qobj, AND TARGET │
│   θsa FROM ECU MAP       │ │ IGNITION TIMING θsa FROM ECU MAP │
└──────────────────────────┘   └──────────────────────────┘
           │ S25                          │ S29
           ▼                              ▼
┌──────────────────────────┐   ┌──────────────────────────┐
│ CALCULATE VALVE OPENING  │   │ CALCULATE VALVE OPENING  │
│ TIMING θIO AND VALVE CLOS-│   │ TIMING θIO AND VALVE CLOS-│
│ ING TIMING θIC OF INTAKE │   │ ING TIMING θIC OF INTAKE │
│ VALVE 7 FROM Ne, VALVE   │   │ VALVE 7 FROM Ne, VALVE   │
│ PHASE, VALVE LIFT        │   │ PHASE, VALVE LIFT        │
│   INTAKE TDC: θITDC      │   │   INTAKE TDC: θITDC      │
│   INTAKE BDC: θIBDC      │   │   INTAKE BDC: θIBDC      │
└──────────────────────────┘   └──────────────────────────┘
           │                              │
           ▼                              │
┌──────────────────────────┐             │
│ WHEN DISPLACEMENT SPEED OF │             │
│ INTAKE VALVE 7 IS CHANGED TO│─ S26       │
│ NEGATIVE VALUE FROM ZERO OR │             │
│ MORE, CALCULATE TIMING    │ S27          │
│          θACCO           │             │
└──────────────────────────┘             │
           │                              ▼ S30
           ▼                   ┌──────────────────────────┐
┌──────────────────────────┐   │ INJECTION START TIMING θSOI< │
│ INJECTION START TIMING   │   │   Max(θIO, θITDC)-θdly    │
│ θSOI>Max(θIO, θITDC)-θdly │   └──────────────────────────┘
│ INJECTION END TIMING     │             │
│ θEOI<Min(θACCO, θIBDC)-  │             │
│          θdly            │             │
└──────────────────────────┘             │
           │                              │
           ▼◄─────────────────────────────┘
       (RETURN)
```

## FIG. 5

FUEL INJECTION

DISPLACEMENT SPEED
OF INTAKE VALVE 7

LIFT OF INTAKE
VALVE 7

EXHAUST     INTAKE   COMPRESSION

## FIG. 6

FUEL INJECTION

θIO    θACCO    θIC

DISPLACEMENT SPEED
OF INTAKE VALVE 7

LIFT OF INTAKE
VALVE 7

| EXHAUST | INTAKE | COMPRESSION | EXPANSION | EXHAUST |

-540°    -360°    -180°    0°    180°    360°

θITDC    θIBDC

## REFERENCES CITED IN THE DESCRIPTION

### Patent documents cited in the description

- JP 8228447 A

- JP 2007239583 A